# EUROPÄISCHE PATENTSCHRIFT

(11) **EP 1 963 607 B1**
(45) Veröffentlichungstag und Bekanntmachung des Hinweises auf die Patenterteilung: **29.08.2012**
(21) Anmeldenummer: 06829217.6
(22) Anmeldetag: 28.11.2006
(51) Int. Cl.: E05F 15/16, B60J 1/17, E05F 15/00

(54) **STEUERUNGSSYSTEM ZUR STEUERUNG EINER ELEKTROMOTORISCH BETRIEBENEN VERSTELLEINRICHTUNG IN EINEM KRAFTFAHRZEUG**
CONTROL SYSTEM FOR CONTROLLING AN ADJUSTING DEVICE OPERATED BY ELECTRIC MOTOR IN A MOTOR VEHICLE
SYSTEME DE COMMANDE D'UN DISPOSITIF D'AJUSTEMENT ENTRAINE PAR MOTEUR ELECTRIQUE DANS UN VEHICULE AUTOMOBILE

(30) Priorität: 12.12.2005 DE 202005019565 U
(43) Veröffentlichungstag der Anmeldung: 03.09.2008
(73) Patentinhaber: Brose Fahrzeugteile GmbH & Co. KG, Coburg, 96450 Coburg (DE)
(72) Erfinder: HELD, Jochen, 91301 Forchheim (DE); KALB, Roland, 96269 Grossheirath (DE); SCHLESIGER, Markus, 96103 Hallstadt (DE); ZELLMER, Rene, 96242 Sonnefeld (DE); BUHLHELLER, Jürgen, 97478 Knetzgau (DE)
(74) Vertreter: Baumgärtel, Gunnar
(86) Internationale Anmeldenummer: PCT/EP2006/011520
(87) Internationale Veröffentlichungsnummer: WO 2007/068362

(56) Entgegenhaltungen:
- DE-A1- 3 206 243
- DE-A1- 19 745 597
- DE-A1- 19 809 628
- GB-A- 2 010 957
- US-A- 5 789 887
- US-A1- 2003 213 177
- US-B1- 6 657 409

## Beschreibung

Die Erfindung betrifft ein Steuerungssystem zur Steuerung einer elektromotorisch betriebenen Verstelleinrichtung in einem Kraftfahrzeug. Das Dokument US-B1-6657409 offenbart alle Merkmale des Oberbegriffs des Anspruchs 1.

Derartige Steuerungssysteme umfassen oftmals ein indirektes Einklemmschutzsystem zum Detektieren einer Einklemmsituation zwischen einem durch die Verstelleinrichtung in einer Verstellbewegung entlang eines Verstellweges bewegten Verstellelement und einem Fahrzeugelement. Derartige Verstellelemente sind insbesondere als Fensterscheibe, als Kraftfahrzeugsitz oder als Kraftfahrzeugtür bzw. als Heckklappe ausgebildet.

Das indirekte Einklemmschutzsystem umfasst eine Analyseeinheit mit der sich die Verstellbewegung des Verstellelements analysieren lässt. Anhand dieser Analyse der Verstellbewegung kann die Analyseeinheit feststellen, ob sich im Verfahrweg des Verstellelementes ein Hindernis befindet, das zwischen dem bewegten Verstellelement und dem Fahrzeugelement einklemmt. Bei dem Fahrzeugelement kann es sich um ein beliebiges Bauelement des Kraftfahrzeuges handeln, auf das sich das Fahrzeugelement während der Verstellbewegung zu bewegt, so dass sich der Abstand zwischen Fahrzeugelement und Verstellelement verkleinert.

Die Analyse der Verstellbewegung erfolgt dabei üblicherweise über charakteristische Parameter der zugeordneten Antriebseinheit, die als Antrieb für die Verstellbewegung des Verstellelementes dient. Weichen diese von einem vorgegebenen Muster ab bzw. überschreiten sie definierte Schwellwerte, so stoppt und reversiert das Einklemmschutzsystem die Verstellbewegung des Verstellelementes. Im Gegensatz zu direkten Einklemmschutzsystemen, bei denen eine Sensoreinheit den mechanischen Einklemmvorgang eines Hindernisses detektiert, ermittelt das indirekte Einklemmschutzsystem den Einklemmvorgang über die Auswertung der charakteristischen Parameter der Antriebseinheit.

Derartige indirekte Steuerungssysteme werden nach der Montage der zugeordneten Verstelleinrichtung im Kraftfahrzeug üblicherweise dadurch getestet, dass ein Hindernis in den Verfahrweg des Verstellelementes gebracht wird, um einen Einklemmfall zu simulieren. Löst der indirekte Einklemmschutz aus, so werden das Steuerungssystem und die Verstelleinrichtung als fehlerfrei eingestuft.

Die bekannten Steuerungssysteme weisen jedoch den Nachteil auf, dass nur derartig fehlerhaft montierte Verstelleinrichtungen als ungeeignet erkannt werden, die so schwergängig sind, dass deren Schwergängigkeit zum Ansprechen des indirekten Einklemmschutzsystems führt. Oftmals verursachen jedoch gewisse Montagefehler auch fehlerhafte mechanische Laufeigenschaften, die nicht durch das Einklemmschutzsystem erkannt werden. Diese fehlerhaften Laufeigenschaften können beispielsweise als Schwergängigkeiten auftreten, die unterhalb der Ansprechschwelle für das Einklemmschutzsystem liegen. Ebenso ist denkbar, dass eine fehlerhafte Montage der Verstelleinrichtung zu unerwünschten Leichtgängigkeiten der Verstelleinrichtung führt.

Diese Montagefehler können zusammen mit nach und nach auftretenden Verschleißerscheinungen der Verstelleinrichtung insbesondere dazu führen, dass die Schwergängigkeit der Verstelleinrichtung derart ansteigt, dass dadurch das Einklemmschutzsystem auslöst. Dieser unerwünschte Effekt tritt oftmals erst nach einer gewissen Gebrauchszeit der Verstelleinrichtung durch den Endnutzer auf.

Der vorliegende Erfindung liegt somit die Aufgabe zu Grunde, ein Steuerungssystem für Kfz-Verstelleinrichtungen mit einem indirekten Einklemmschutzsystem bereit zu stellen, das eine verbesserte Erkennung von Montagefehfem der Verstelleinrichtung aufweist.

Diese Aufgabe wird durch ein Steuerungssystem mit den Merkmalen des Anspruchs 1 gelöst.

Erfindungsgemäß ist vorgesehen, dass das Steuerungssystem derart eingerichtet und ausgebildet ist, dass sich mittels der Analyseeinheit in einem Analysemodus die aus der Verstellbewegung resultierenden mechanischen Laufparameter der Verstelleinrichtung auf mechanische Funktionsstörungen der Verstelleinrichtung überprüfen lassen, indem in dem Analysemodus Schwellwerte für die Laufparameter ausgewählt sind, die oberhalb oder unterhalb der Schwellwerte für das Detektieren einer Einklemmsituation liegen.

Es ist somit eine Doppelfunktion der Analyseeinheit des Einklemmschutzsystems vorgesehen. Diese Analyseeinheit fungiert einerseits -wie bereits beschrieben- als funktionaler Bestandteil des indirekten Einklemmschutzsystems. Andererseits untersucht die Analyseeinheit die Parameter der Antriebseinheit im Hinblick auf die mechanischen Laufparameter der Verstelleinrichtung. Als mechanische Laufparameter sind alle physikalisch messbaren Größen anzusehen, die in Wechselwirkung mit dem mechanischen Bewegungsablauf der Verstelleinrichtung stehen. Dies sind insbesondere der Drehzahlverlauf und der Drehmomentverlauf der Antriebseinheit, die Länge der Bewegung des Verstellelements entlang des Verstellweges und der Leerweg der Verstelleinrichtung beim Reversieren der Bewegungsrichtung des Verstellelementes.

Bevorzugt ist das Steuerungssystem derart ausgebildet, dass sich die mechanischen Funktionsstörungen in Form einer entlang des Verstellweges abschnittsweise überdurchschnittlichen Schwergängigkeit der Verstelleinrichtung ermitteln lassen. Ergänzend oder alternativ kann sich durch die Analyse der vorhandenen Parameter *jedoch auch eine überdurchschnittliche Leichtgängigkeit der Verstelleinrichtung bei der* Bewegung des Verstellelementes ermitteln lassen. Eine überdurchschnittliche Leichtgängigkeit der Verstelleinrichtung kann ebenfalls durch Montagefehler verursacht sein.

Es ist zweckmäßig, wenn das Steuerungssystem eine Steuereinheit umfasst. Diese Steuereinheit ist derart ausgebildet und eingerichtet, dass sich das Analyseergebnis anhand mindestens einer durch die Steuereinheit generierten Diagnosebotschaft darstellen lässt. Es ist selbstverständlich, dass die Steuereinheit dazu auch als integraler Bestandteil der Analyseeinrichtung ausgebildet werden kann. Im Rahmen der üblicherweise zum Einsatz kommenden integrierten elektronischen Bauelemente ist eine solche Integration auf einfache Weise ermöglicht. Entscheidend ist, ob die Funktionalität des Generierens einer Analysebotschaft durch das Steuerungssystem realisiert ist oder nicht.

Diese Diagnosebotschaften generiert das Steuerungssystem üblicherweise automatisch oder auf eine manuelle Anforderung hin. Für die manuelle Anforderung ist an einer geeigneten Stelle der Verstelleinrichtung ein Betätigungselement vorgesehen.

Bevorzugt stellt das Steuerungssystem sicher, dass die Diagnosebotschaft mit einem charakteristischen Bewegungsablauf des Verstellelements und/oder als optische Diagnosebotschaft in Form einer Anzeige einer Nachricht auf einem am Kraftfahrzeug angeordneten Display realisiert. Dazu lässt sich beim Montagevorgang beispielsweise das ohnehin in vielen Kraftfahrzeugen vorgesehene Display eines Bordcomputers bzw. eines Navigationssystems verwenden.

Die Displaydarstellung weist zweckmäßig ein die Verfahrbewegung des Verstellelementes darstellendes Diagramms auf. In diesem Diagramm ist beispielsweise über den vollständigen Bewegungsablauf des Verstellelements der Drehmomentverlauf gegen die Zeit aufgetragen. Andere Darstellungen im Diagramm sind selbstverständlich ebenso möglich. Die vorangehend genannten mechanischen Laufeigenschaften sind dabei ein einer geeigneten Art und Weise darzustellen. Geeignet sind sämtliche Darstellungen, die einen Rückschluss auf die Qualität der Montage von der Verstelleinrichtung zulassen.

Bevorzugt weist eine optische Diagnosebotschaft in Form eines solchen Diagramms einen ebenfalls am Display dargestellten Textanteil auf. Eine solche Textbotschaft enthält bevorzugt Informationen darüber, ob mechanische Funktionsstörungen der Verstelleinrichtung vorliegen. Falls solche mechanische Funktionsstörungen der Verstelleinrichtung ermittelt worden sind, so ist es zweckmäßig, wenn der Textanteil der optischen Diagnosebotschaft weiter führende Informationen zur Fehlerbehebung aufweist. Diese können auch auf externe Informationsquellen zur Fehlerbehebung - wie beispielsweise auf ein Handbuch - hinweisen.

Bevorzugt führt das Steuerungssystem mittels der Analyseeinheit eine Drehzahlüberwachung der Verstelleinrichtung durch Mittelwertbildung über den gesamten Verstellweg durch. Diese Drehzahlüberwachung kann auch durch abschnittweise Mittelwertbildung entlang des Verstellweges auf eine Mehrzahl von Bewegungsabschnitte der Verstelleinrichtung aufgeteilt sein.

Ergänzend oder alternativ ist es zweckmäßig, wenn das Steuerungssystem mittels der Analyseeinheit eine Überwachung der Gleichlaufschwankungen der Verstelleinrichtung vornimmt. Die Überwachung der Gleichlaufschwankungen lässt sich ebenfalls in mehrere Abschnitte untergliedern.

Im Hinblick auf die eingangs erwähnte Doppelfunktion der Analyseeinrichtung ist es zweckmäßig, wenn das Steuerungssystem einen Analysemodus aufweist, der sich mittels eines Betätigungselements am Kraftfahrzeug aktivieren lässt. Bevorzugt ist das Betätigungselement dabei so ausgebildet, dass der Analysemodus erst nach der Eingabe eines Codes aktiviert ist.

Der Analysemodus zeichnet sich in einer Anwendungsform dadurch aus, dass die Analyseeinheit des Einklemmschutzsystems im Analysemodus des Steuerungssystems niedrigere Schwellwerte für ein maximales Drehmoment und/oder eine maximale Drehmomentänderung der Verstelleinrichtung über ein Zeit- oder über ein Wegintervall des Verstellweges aufweist. Auf diese Weise lassen sich entlang des Verstellweges vom Verstellelement kritischen Positionsbereiche mechanischer Schwergängigkeiten ermitteln.

Eine weitere bevorzugte Variante besteht darin, das Steuerungssystem derart auszubilden und einzurichten, dass die Diagnosebotschaft für kritische Positionsbereiche entlang des Verstellweges, an denen die niedrigeren Schwellwerte überschritten werden, als charakteristischer Bewegungsablauf des Verstellelementes entlang der kritischen Positionsbereiche ausgebildet ist. Zusätzlich kann vorgesehen sein, die Diagnosebotschaft für kritische Positionsbereiche als optische Information auszubilden und sich über ein am Kraftfahrzeug angeordnetes Display anzeigen zu lassen.

Für die Darstellung auf dem Display gelten die vorangehenden Ausführungen entsprechend.

Eine weitere zweckmäßige Variante des Steuerungssystems besteht darin, das Steuerungssystem mit einem elektronischen Speicherelement zum Ablegen der ermittelten mechanischen Laufparameter auszubilden. Ebenso ist denkbar, dass ein Speichermedium ergänzend oder alternativ vorhanden ist, in dem für eine ordnungsgemäß montierte Verstelleinrichtung entsprechende Laufparameter abgelegt sind. Diese lassen sich dann anhand der Analyseeinrichung mit den ermittelten mechanischen Laufparametern vergleichen.

Bevorzugt ist eine Verstelleinrichtung in Form eines Fensterhebersystems für eine Kraftfahrzeug-Fensterscheibe mit einem der vorangehend beschriebenen Steuerungssysteme ausgebildet.

Dabei ist es zweckmäßig, die ermittelten mechanischen Laufparameter für den Einlaufbereich der Fensterscheibe in eine zugeordnete Fensterdichtung mit Parameter-Grenzwerten für einen ordnungsgemäßen Dichtungseinlauf der Fensterscheibe zu vergleichen. Auf diese Weise lässt sich die ordnungsgemäße Montage der als Fensterhebersystem ausgebildeten Verstelleinrichtung im Hinblick auf den oftmals kritischen Einlauf der Fensterscheibe in die Fensterdichtung testen.

Ebenso lässt sich eine Ausführungsvariante des vorangehend beschriebenen Steuerungssystems für eine Verstelleinrichtung in Form eines elektromotorisch verstellbaren Kraftfahrzeugsitzes bzw. eine elektrisch verstellbare Heckklappe eines Kraftfahrzeuges vorsehen.

Weitere Merkmale und Vorteile der Erfindungen werden im Zusammenhang mit den im Folgenden beschriebenen bevorzugten Ausführungsbeispielen erläutert.

Es zeigt:
- Figur 1: eine schematische Darstellung des Steuerungssystems und seiner Funktion in Form eines Blockschaltbildes;
- Figur 2a: eine erste Anwendungsvariante des Steuerungssystems in einem Fensterhebersystem eines Kraftfahrzeuges;
- Figur 2b: ein zweite Anwendungsvariante des Steuerungssystems für eine Verstelleinrichtung eines Kraftfahrzeugsitzes und
- Figur 2c: eine dritte Anwendungsvariante des Steuerungssystems für die Verstelleinrichtung.

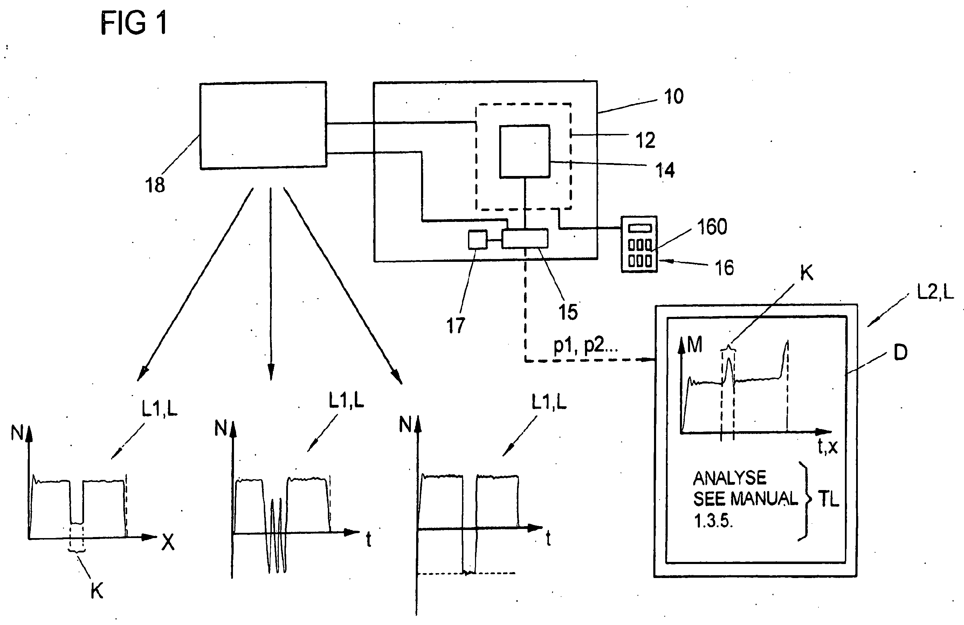

Figur 1 zeigt das Blockschaltbild einer möglichen Variante eines Steuerungssystems 10 zur Steuerung einer in Figur 1 nicht dargestellten Verstelleinrichtung in einem Kraftfahrzeug, die mittels einer Antriebseinheit 18 elektromotorisch betrieben wird.

Das Steuerungssystem 10 umfasst ein Einklemmschutzsystem 12. Dieses Einklemmschutzsystem 12 ist mit der Antriebseinheit 18 verbunden. Die Antriebseinheit 18 treibt die Verstellbewegung eines in Figur 1 nicht dargestellten Verstellelements 11 der Verstelleinrichtung 1 entlang eines Verstellweges X an und umfasst üblicherweise einen elektrisch betriebenen Motor, der über eine Getriebeeinheit mit dem Verstellelement 11 zusammenwirkt.

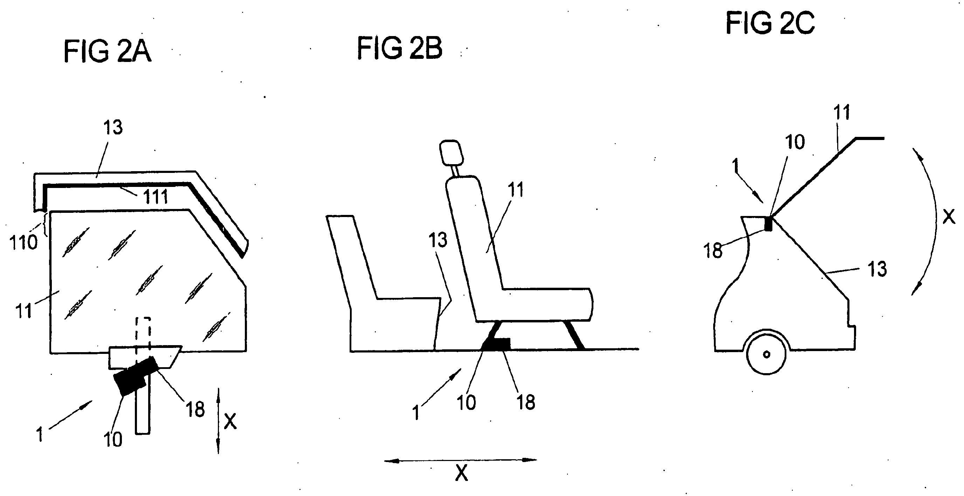

In den Figuren 2a bis 2c sind als Anwendungsbeispiele verschiedene Verstelleinrichtungen 1 mit dem jeweiligen Verstellelement 11 in Form eines Fensterhebersystems mit einer Fensterscheibe 11 (Figur 2a), als Kfz-Sitz-Verstellung mit einem Kraftfahrzeugsitz 11 (Figur 2b) und als eine motorisch betriebenen Fahrzeug-Heckklappe 11 (Figur 2c) dargestellt. Diese Anwendungsbeispiele weisen jeweils ein mit der zugeordneten Antriebseinheit 18 zusammenwirkendes Steuerungssystem 10 auf. Die Antriebseinheit 18 treibt eine Bewegung des jeweiligen Verstellelements 11 entlang des Verstellweges X an.

Für jede der in den Figuren 2a bis 2c gezeigten Verstelleinrichtungen 1 existiert ein dem Verstellelement 11 benachbart angeordnetes Fahrzeugelement 13. Dieses Fahrzeugelement 13 ist jeweils derart angeordnet, dass sich der Abstand zwischen dem Verstellelement 11 und dem benachbarten Fahrzeugelement 13 verkleinert, wenn sich das Verstellelement 11 entlang des Verstellweges X in Richtung des Fahrzeugelementes 13 bewegt. Dadurch, dass sich der Abstand zwischen Verstellelement 11 und Fahrzeugelement 13 verkleinert, besteht die Möglichkeit, dass durch die Verstellbewegung ein Hindernis zwischen Verstellelement 11 und Fahrzeugelement 13 eingeklemmt wird. Um einen solchen Einklemmfall erkennen zu können, weist das Steuerungssystem 10 ein Einklemmschutzsystem auf. Ein solches Einklemmschutzsystem 12 ist beispielhaft in der schematischen Darstellung der Figur 1 wiedergegeben.

Das in Figur 1 gezeigte Einklemmschutzsystem 12 umfasst eine Analyseeinheit 14 zur Analyse mechanischer Laufparameter (p1, p2...), die aus der Verstellbewegung der Verstelleinrichtung resultieren. Diese Laufparameter (p1, p2...) können insbesondere aus den folgenden Parametern gewählt sein: Drehzahl N der Antriebseinheit 18 bzw. des angetriebenen Verstellelementes 11, Drehmoment M der Antriebseinheit 18, die zeitliche Veränderung der Drehzahl N bzw. des Drehmomentes M oder auch die Bewegungslänge des Verstellelementes 11 oder das Spiel der Verstelleinrichtung 1 bei einer Umkehr der Bewegungsrichtung des Verstellelementes 11 auf dessen Verstellweg X. Anhand charakteristischer Änderungen dieser mechanischen Laufparameter (p1, p2...) oder aufgrund des Überschreitens von Grenzwerten kann der Einklemmfall eines Hindernisses zwischen dem Verstellelement 11 und dem Fahrzeugelement 13 ermittelt werden.

Die Ermittlung eines Einklemmfalls führt zum Stoppen und/oder zum Reversieren der Verstellbewegung des Verstellelements 11. Der Einklemmfall wird somit nicht direkt über die mechanische Wechselwirkung eines eingeklemmten Hindernisses mit dem Verstellelement 11 und/oder dem Fahrzeugelement 13 sondern indirekt über die Analyse der vorangehend genannten mechanischen Laufparameter (p1, p2...) ermittelt.

Weiterhin umfasst das Steuerungssystem 10 eine Steuereinheit 15 mit einem elektronischen Speicherelement 17. Mit dem Steuerungssystem 10 wirkt weiterhin ein Betätigungselement 16 mit einer Tastatur 160 zusammen. Dieses Betätigungselement 16 kann entweder - wie in Figur 1 dargestellt separat - oder aber auch als Bestandteil des Steuerungssystems 10 ausgebildet sein.

Im Folgenden wird die Funktionsweise des Steuerungssystems 10 beschrieben. Mittels des Betätigungselementes 16 lässt sich das Steuerungssystem 10 in einen Analysemodus versetzen. Das heißt, die Analyseeinheit 14 des Einklemmschutzsystems 12 analysiert die mechanischen Laufparameter p1, p2... der Verstelleinrichtung 1 nicht im Hinblick auf einen Einklemmfall sonder auf mechanische Funktionsstörungen. Abhängig von der konkreten Ausgestaltung der Verstelleinrichtung 1 können dabei verschiedene Funktionsstörungen in Betracht kommen. Falls die Verstelleinrichtung 1 Führungsschienen für die Bewegung des Verstellelementes 11 vorsieht, so können diese bei deren Montage fehlerhaft positioniert worden sein, so dass daraus entlang des Verstellweges X zumindest abschnittsweise eine unerwünschte Schwergängigkeit resultiert. Befinden sich Dichtungselemente während der Verstellbewegung in Reibkontakt mit bewegten Elementen der Verstelleinrichtung, so kann aus einer fehlerhaften Positionierung der Dichtungselemente eine erhöhte zu überwindende Reibungskraft resultieren. Bei Fehlen dieser Dichtungselemente ist es ebenso denkbar, dass die Summe der bewegungshemmenden Kräfte zu niedrig ausfällt. Weiterhin ist denkbar, dass ein Getriebeschaden vorliegt oder andere Bauelemente in den jeweiligen Verstellweg X des Verstellelementes 11 hineinragen oder entlang des Verstellweges X abschnittsweise mechanisch mit dem Verstellelement 11 in Wechselwirkung treten und somit die Bewegung des Verstellelementes 11 erschweren. Bei einer Ausbildung der Verstelleinrichtung als Fensterheber können dies beispielsweise andere im Türinnenraum angeordnete Bauelemente wie z.B. die Befestigung des Außenspiegels sein.

Derartige mechanische Funktionsstörungen lassen sich mittels der Analyseeinheit 14 ermitteln, wenn zum Beispiel die Grenzwerte für auftretende Drehzahländerungen oder Drehmomentänderungen entsprechend empfindlich ausgewählt sind. Hat die Analyseeinheit 14 eine mechanische Funktionsstörung der Verstelleinrichtung ermittelt, so generiert die Steuereinrichtung 15 eine Diagnosebotschaft L. Diese Diagnosebotschaft L lässt sich beispielsweise als charakteristischer Bewegungsablauf L1 des Verstellelementes 11 ausbilden. Dazu steuert die Steuereinrichtung die Antriebseinheit 18 derart an, dass in so genannten kritischen Bereichen K des Verstellweges X, in denen eine mechanische Funktionsstörung vorliegt, eine erkennbare Abweichung vom üblichen Bewegungsablauf des Verstellelementes 11 gewährleistet ist. Diese Diagnosebotschaft kann sich durch eine die Verstelleinrichtung 1 kontrollierende Person über das Betätigungselement 16 anfordern lassen.

In Figur 1 sind in den auf der linken Seite angeordneten Diagrammen drei beispielhafte Varianten eines veränderten Bewegungsablaufes L1 dargestellt. Für alle drei gezeigten Bewegungsabläufe L1 ist die Drehzahl N der Antriebseinheit dargestellt. Bei dem links dargestellten ersten Bewegungsablauf L1 ist die Drehzahl N über den Verstellweg X aufgetragen. Bei diesem Bewegungsablauf L1 ist die Drehzahl im dargestellten kritischen Bereich K, der eine mechanische Funktionsstörung aufweist, deutlich abgesenkt. Auf diese Weise lassen sich mechanischen Funktionsstörungen der Verstelleinrichtung 1 entlang des Verstellweges X bei einer entsprechenden Sichtkontrolle gut erkennen.

In den beiden weiteren dargestellten Bewegungsabläufen L1 ist die Drehzahl N jeweils gegen die Verfahrzeit t aufgetragen. Wenn das Verstellelement 11 auf seinem Verstellweg X den Bereich der mechanischen Funktionsstörung der Verstelleinrichtung erreicht hat, lässt die Steuereinheit 15 das Verstellelement 11 im Zusammenwirken mit der Antriebseinheit 18 mehrere Male (mittleres Diagramm) oder einmal (rechtes Diagramm) entlang des kritischen Bereiches reversieren. Auch dadurch ist für eine die Funktionsweise der Verstelleinrichtung 1 kontrollierende Person der kritische Bereich K des Verstellweges X leicht erkennbar. Es ist zweckmäßig, wenn diese Person die vorangehend beschriebenen Diagnosebotschaften L1 mittels des Bedienelementes 16 wiederholt abrufen kann, bis die mechanische Funktionsstörung der Verstelleinrichtung 1 genau identifiziert und lokalisiert ist.

Alternativ oder kumulativ zur vorangehend beschriebenen Diagnosebotschaft in Form eines charakteristischen Bewegungsablaufes L1 des Verstellelementes 11 lässt sich mittels der Steuereinheit 15 an einem im Kraftfahrzeug ohnehin vorgesehenen Display D eine optische Diagnosebotschaft L2 realisieren. Das Display D zeigt diese als eine Diagrammdarstellung der mechanischen Laufparameter p1, p2... der Verstelleinrichtung 1, die beispielsweise das Drehmoment M über den Verstellweg X oder die Zeit t darstellt.

Dadurch lässt sich im Gegensatz zu der reinen Darstellung der Diagnosebotschaft L mittels eines veränderten Bewegungsablaufs L1 eine mechanische Funktionsstörung der Verstelleinrichtung 1 in einem kritischen Bereich K nicht nur qualitativ sondern auch quantitativ darstellen. Eine Kontrollperson kann anhand des Diagrammes erkennen, wie stark die gezeigten mechanischen Laufparameter p1, p2... von den üblichen Werten einer korrekt montierten und funktionierenden Verstelleinrichtung 1 abweichen.

Alternativ oder kumulativ kann die auf dem Display D dargestellte optische Diagnosebotschaft L2 einen Textanteil TL umfassen. Dieser Textanteil enthält weiterführende Informationen zur Behebung der ermittelten mechanischen Funktionsstörungen der Verstelleinrichtung 1. Dies ist beispielsweise dadurch realisierbar, dass die Analyseinheit 14 des Steuerungssystems 10 mit einer entsprechenden integriert elektronisch ausgebildeten Logik ausgestattet ist, die eine Kategorisierung üblicher mechanischer Funktionsstörungen erlaubt. Dies kann so weit gehen, dass der fehlerfreie Bewegungsablauf des Verstellelementes 11 zumindest abschnittsweise zusammen mit akzeptablen Toleranz-Grenzwerten in einem geeigneten Speicherelement abgelegt ist. Dadurch lässt sich der gewünschte Bewegungsablauf des Verstellelementes entsprechend kontrollieren.

Bei der in Figur 2a gezeigten Variante des Fensterhebersystems 1 mit Steuerungssystem 10 ist dies beispielsweise für den zur Fensterdichtung 111 benachbart angeordneten Einlaufbereich 110 der Fensterscheibe 11 zweckmäßig. Da der Dichtungseinlauf einer Kfz-Fensterscheibe im Hinblick auf die Montage oder Wartung eines Fensterhebersystems 1 besondere Sorgfalt erfordert, ist es zweckmäßig Laufparameter eines im schlimmsten Fall noch akzeptablen Dichtungseinlauf im Steuerungssystem 10 zu hinterlegen, so dass die Analyseeinheit 14 einen entsprechenden Vergleich vornehmen kann.

Ebenso ist es denkbar, die Analyseeinrichtung 14 mit der Funktionalität eines neuronalen Netzes auszubilden, um eine sich adaptierende Erkennung mechanischer Fehlfunktionen zu realisieren.

Durch die Kategorisierung der mechanischen Fehlfunktion kann über den Textanteil TL der optischen Diagnosebotschaft L2 gezielt auf die zur entsprechenden Kategorie des Fehlers gehörigen weiterführenden Informationen hingewiesen werden.

Ebenso ist denkbar, dass diese weiterführenden Informationen in einem Speicherelement der Verstelleinrichtung 1 abgelegt sind. Dadurch sind sie bei Bedarf über das Display D abrufbar, ohne dass ein separates Handbuch konsultiert werden muss.

### Bezugszeichenliste

- 1: Verstelleinrichtung (Fensterhebersystem, Sitzverstellung, Heckklappen-System)
- 10: Steuerungssystem
- 11: Verstellelement (Kfz-Fensterscheibe, Kraftfahrzeugsitz, Heckklappe)
- 110: Einlaufbereich der Fensterscheibe
- 111: Fensterdichtung
- 12: Einklemmschutzsystem
- 13: Fahrzeugelement
- 14: Analyseeinheit
- 15: Steuereinheit
- 16: Betätigungselement
- 160: Tastatur des Betätigungselements
- 17: elektronisches Speicherelement des Steuerungssystems
- 18: Antriebseinheit

- D: Display
- K: kritische Positionsbereiche entlang des Verstellweges
- L: Diagnosebotschaft
- L1: charakteristischer Bewegungsablauf
- L2: optische Diagnosebotschaft
- M: Drehmoment
- N: Drehzahl der Antriebseinheit
- p1, p2,...: mechanische Laufparameter
- t: Zeit
- TL: Textanteil der optischen Diagnosebotschaft
- X: Verstellweg

## Patentansprüche

1. Steuerungssystem zur Steuerung einer elektromotorisch betriebenen Verstelleinrichtung (1) in einem Kraftfahrzeug, wobei das Steuerungssystem (10) ein indirektes Einklemmschutzsystem (12) zum Detektieren einer Einklemmsituation zwischen einem durch die Verstelleinrichtung (1) in einer Verstellbewegung entlang eines Verstellweges (X) bewegten Verstellelement (11) und einem Fahrzeugelement (13) umfasst und das Einklemmschutzsystem (12) die Verstellbewegung des Verstellelementes (11) stoppt oder reversiert, wenn ein definierter Schwellwert für einen aus der Verstellbewegung resultierenden mechanischen Laufparameter (p1, p2...) überschritten wird, und wobei das Einklemmschutzsystem (12) mit einer Analyseeinheit (14) zur Analyse der Verstellbewegung des Verstellelements (11) arbeitet, **dadurch gekennzeichnet, dass** das Steuerungssystem (10) derart eingerichtet und ausgebildet ist, dass sich mittels der Analyseeinheit (14) in einem Analysemodus die Laufparameter (p1, p2..) der Verstelleinrichtung auf mechanische Funktionsstörungen der Verstelleinrichtung (1) überprüfen lassen, indem in dem Analysemodus Schwellwerte für die Laufparameter (p1, p2...) ausgewählt sind, die oberhalb oder unterhalb der Schwellwerte für das Detektieren einer Einklemmsituation liegen.

2. Steuerungssystem gemäß Anspruch 1, wobei sich die mechanischen Funktionsstörungen in Form einer entlang des Verstellweges (X) abschnittsweisen überdurchschnittlichen Schwergängigkeit der Verstelleinrichtung (1) ermitteln lassen.

3. Steuerungssystem gemäß Anspruch 1 oder 2, wobei das Steuerungssystem (10) eine Steuereinheit (15) aufweist, die anhand der analysierten mechanischen Laufparameter (p1, p2...) mindestens eine Diagnosebotschaft (L) generiert.

4. Steuerungssystem gemäß Anspruch 3, wobei die Steuereinheit derart ausgebildet ist, dass diese die Diagnosebotschaft (L) automatisch oder auf eine manuelle Anforderung hin generiert.

5. Steuerungssystem gemäß Anspruch 3 oder 4, wobei die Steuereinheit (15) die Diagnosebotschaft (L) mit einem charakteristischen Bewegungsablauf (L1) des Verstellelements (11) und/oder als optische Diagnosebotschaft (L2) in Form einer Anzeige einer Nachricht auf einem am Kraftfahrzeug angeordneten Display (D) realisiert.

6. Steuerungssystem gemäß Anspruch 5, wobei die optische Diagnosebotschaft (L2) ein Diagramm umfasst, das die Verfahrbewegung und/oder den Verfahrweg (X) darstellt, und/oder einen Textanteil (T1) aufweist, der Hinweise zum Auffinden weiter führender Informationen zur Fehlerbehebung enthält..

7. Steuerungssystem gemäß einem der vorangehenden Ansprüche, wobei das Steuerungssystem (10) mittels der Analyseeinheit (14) eine Drehzahlüberwachung der Verstelleinrichtung durch Mittelwertbildung über den gesamten Verstellweg (X) durchführt.

8. Steuerungssystem gemäß einem der vorangehenden Ansprüche, wobei das Steuerungssystem (10) mittels der Analyseeinheit (14) eine Überwachung der Gleichlaufschwankungen der Verstelleinrichtung (10) durchführt.

9. Steuerungssystem gemäß einem der vorangehenden Ansprüche, wobei sich das Steuerungssystem (10) durch ein Betätigungselement (16) am Kraftfahrzeug in den Analysemodus versetzen lässt.

10. Steuerungssystem gemäß Anspruch 9, wobei das Steuerungssystem (10) zur Aktivierung des Analysemodus zusätzlich die Eingabe eines Codes mittels des Betätigungselementes (16) fordert.

11. Steuerungssystem gemäß einem der vorangegangenen Ansprüche, wobei die Analyseeinheit (14) des Einklemmschutzsystems (12) im Analysemodus des Steuerungssystems (10) niedrigere Schwellwerte für ein maximales Drehmoment und/oder eine maximale Drehmomentänderung der Verstelleinrichtung (1) über ein Zeit- oder über ein Wegintervall des Verstellweges (X) aufweist.

12. Steuerungssystem gemäß einem der Ansprüche 3 bis 6 und dem Anspruch 11, wobei das Steuerungssystem (10) derart ausgebildet und eingerichtet ist, dass die Diagnosebotschaft für kritische Positionsbereiche (K) entlang des Verstellweges (X), an denen die niedrigeren Schwellwerte überschritten werden, als charakteristischer Bewegungsablauf (L1) des Verstellelementes (11) entlang der kritischen Positionsbereiche (K) ausgebildet ist.

13. Steuerungssystem gemäß einem der vorangehenden Ansprüche, wobei das Steuerungssystem (10) ein elektronisches Speicherelement (17) zum Ablegen der ermittelten mechanischen Laufparameter (p1, p2...) aufweist.

14. Fensterhebersystem für eine Kraftfahrzeug-Fensterscheibe (11), mit einem Steuerungssystem (10) gemäß einem der vorangehenden Ansprüche,

15. Fensterhebersystem gemäß Anspruch 14, wobei das Steuerungssystem (10) die ermittelten mechanischen Laufparameter (p1, p2...) für den Einlaufbereich (110) der Fensterscheibe in eine zugeordnete Fensterdichtung (111) mit Parameter-Grenzwerten für einen ordnungsgemäßen Dichtungseinlauf der Fensterscheibe vergleicht.

16. Fahrzeugsitzsystem für einen Kraftfahrzeugsitz (11), mit einem Steuerungssystem (10) gemäß einem der Ansprüche 1 bis 13.

17. Verstellsystem für eine Heckklappe (11) eines Kraftfahrzeuges, mit einem Steuerungssystem (10) gemäß einem der Ansprüche 1 bis 13.

## Claims

1. A control system for controlling an electromotively operated adjusting means (1) in a motor vehicle, wherein the control system (10) comprises an indirect anti-pinch protection system (12) for detecting a pinching situation between an adjusting element (11) moved by the adjusting means (1) in an adjusting movement along an adjustment path (X) and a vehicle element (13), and the anti-pinch protection system (12) stops or reverses the adjusting movement of the adjusting element (11) when a defined threshold value for a mechanical run parameter (p1, p2, ...) resulting from the adjusting movement is exceeded, and wherein the anti-pinch protection system (12) employs an analysis unit (14) for analyzing the adjusting movement of the adjusting element (11), **characterized in that** the control system (10) is configured and designed such that in an analysis mode the run parameters (p1, p2, ...) of the adjusting means can be checked by means of the analysis unit (14) for mechanical malfunctions of the adjusting means (1), **in that** in the analysis mode threshold values for the run parameters (p1, p2, ...) are selected, which lie above or below the threshold values for detecting a pinching situation.

2. The control system according to claim 1, wherein the mechanical malfunctions can be determined in the form of an above-average sluggishness of the adjusting means (1) along parts of the adjustment path (X).

3. The control system according to claim 1 or 2, wherein the control system (10) includes a control unit (15) which generates at least one diagnostic message (L) with reference to the analyzed mechanical run parameters (p1, p2, ...).

4. The control system according to claim 3, wherein the control unit is designed such that the same generates the diagnostic message (L) automatically or in response to a manual request.

5. The control system according to claim 3 or 4, wherein the control unit (15) realizes the diagnostic message (L) with a characteristic movement (L1) of the adjusting element (11) and/or as optical diagnostic message (L2) in the form of an indication of a message on a display (D) arranged on the motor vehicle.

6. The control system according to claim 5, wherein the optical diagnostic message (L2) comprises a diagram which represents the shifting movement and/or the shifting path (X) and/or includes a textual part (TI) which contains hints for finding further information regarding the elimination of errors.

7. The control system according to any of the preceding claims, wherein the control system (10) uses the analysis unit (14) for monitoring the speed of the adjusting means by forming an average over the entire adjustment path (X).

8. The control system according to any of the preceding claims, wherein the control system (10) uses the analysis unit (14) for monitoring the fluctuations in the synchronous movement of the adjusting means (10).

9. The control system according to any of the preceding claims, wherein the control system (10) can be put into the analysis mode by an actuating element (15) on the motor vehicle.

10. The control system according to claim 9, wherein for activating the analysis mode the control system (10) additionally requests the input of a code by means of the actuating element (16).

11. The control system according to any of the preceding claims, wherein in the analysis mode of the control system (10) the analysis unit (14) of the anti-pinch protection system (12) has lower threshold values for a maximum torque and/or a maximum change in torque of the adjusting means (1) over a time or path interval of the adjustment path (X).

12. The control system according to any of claims 3 to 6 and claim 11, wherein the control system (10) is configured and designed such that the diagnostic message for critical position ranges (K) along the adjustment path (X), at which the lower threshold values are exceeded, is formed as characteristic movement (L1) of the adjusting element (11) along the critical position ranges (K).

13. The control system according to any of the preceding claims, wherein the control system (10) includes an electronic storage element (17) for depositing the determined mechanical run parameters (p1, p2, ...).

14. A window lifter system for a motor vehicle window pane (11), comprising a control system (10) according to any of the preceding claims.

15. The window lifter system according to claim 14, wherein the control system (10) compares the determined mechanical run parameters (p1, p2, ...) for the entry region (110) of the window pane into an associated window seal (111) with parameter limit values for a proper seal entry of the window pane.

16. A vehicle seat system for a motor vehicle seat (11), comprising a control system (10) according to any of claims 1 to 13.

17. An adjusting system for a tailgate (11) of a motor vehicle, comprising a control system (10) according to any of claims 1 to 13.

## Revendications

1. Système de commande pour commander un dispositif de réglage (1) entraîné par moteur électrique dans un véhicule automobile, dans lequel le système de commande (10) comprend un système de sécurité anti-pincement indirect (12) pour détecter une situation de pincement entre un élément de réglage (11) déplacé par le dispositif de réglage (1) lors d'un mouvement de réglage suivant une course de réglage (X) et un élément de véhicule (13), et le système de sécurité anti-pincement (12) arrête ou inverse le mouvement de réglage de l'élément de réglage (11) lorsqu'une valeur de seuil définie est dépassée pour un paramètre de déplacement mécanique (p1, p2, ...) résultant du mouvement de réglage, et dans lequel le système de sécurité anti-pincement (12) fonctionne avec une unité d'analyse (14) pour analyser le mouvement de réglage de l'élément de réglage (11), **caractérisé en ce que** le système de commande (10) est agencé et réalisé de telle sorte que les paramètres de déplacement (p1, p2, ...) du dispositif de réglage peuvent être vérifiés au moyen de l'unité d'analyse (14) dans un mode d'analyse quant à des défaillances mécaniques du dispositif de réglage (1) **en ce qu'**en mode analyse, des valeurs de seuil pour les paramètres de déplacement (p1, p2, ...) sont sélectionnées qui se situent au-dessus ou en dessous des valeurs de seuil permettant la détection d'une situation de pincement.

2. Système de commande selon la revendication 1, dans lequel les défaillances mécaniques peuvent être établies sous la forme d'un mouvement affecté d'une dureté supérieure à la moyenne par endroits pour le dispositif de réglage (1) suivant la course de réglage (X).

3. Système de commande selon la revendication 1 ou 2, dans lequel le système de commande (10) présente une unité de commande (15) qui génère au moins un message de diagnostic (L) à l'aide des paramètres de déplacement mécaniques (p1, p2, ...) analysés.

4. Système de commande selon la revendication 3, dans lequel l'unité de commande est réalisée de telle sorte qu'elle génère le message de diagnostic (L) automatiquement ou suite à une commande manuelle.

5. Système de commande selon la revendication 3 ou 4, dans lequel l'unité de commande (15) réalise le message de diagnostic (L) avec une séquence de mouvement (L1) caractéristique de l'élément de réglage (11) et/ou comme un message de diagnostic optique (L2) sous la forme d'un affichage d'une notification sur un dispositif d'affichage (D) disposé dans le véhicule automobile.

6. Système de commande selon la revendication 5, dans lequel le message de diagnostic optique (L2) comprend un diagramme représentant le mouvement de déplacement et/ou la course de déplacement (X) et/ou présente une partie de texte (TI) contenant des indications permettant de retrouver des informations supplémentaires pour le dépannage.

7. Système de commande selon l'une quelconque des revendications précédentes, dans lequel le système de commande (10) effectue au moyen de l'unité d'analyse (14) une surveillance de régime de rotation du dispositif de réglage en établissant la moyenne sur l'ensemble de la course de réglage (X).

8. Système de commande selon l'une quelconque des revendications précédentes, dans lequel le système de commande (10) effectue au moyen de l'unité d'analyse (14) une surveillance des variations du synchronisme du dispositif de réglage (10).

9. Système de commande selon l'une quelconque des revendications précédentes, dans lequel le système de commande (10) peut être placé dans le mode d'analyse par un élément d'actionnement (16) dans le véhicule automobile.

10. Système de commande selon la revendication 9, dans lequel, pour activer le mode d'analyse, le système de commande (10) exige en plus la saisie d'un code au moyen de l'élément d'actionnement (16).

11. Système de commande selon l'une quelconque des revendications précédentes, dans lequel l'unité d'analyse (14) du système de sécurité anti-pincement (12) présente en mode analyse du système de commande (10) des valeurs de seuil inférieures pour un couple maximal et/ou une modification de couple maximale du dispositif de réglage (1) pendant un intervalle de temps ou de course de la course de réglage (X).

12. Système de commande selon l'une quelconque des revendications 3 à 6 et la revendication 11, dans lequel le système de commande (10) est réalisé et aménagé de telle sorte que le message de diagnostic pour des secteurs de positions critiques (K) suivant la course de réglage (X) où les valeurs de seuil inférieures sont dépassées est réalisé comme une séquence de mouvement (L1) caractéristique de l'élément de réglage (11) suivant les secteurs de positions critiques (K).

13. Système de commande selon l'une quelconque des revendications précédentes, dans lequel le système de commande (10) présente un élément de stockage électronique (17) pour classer les paramètres de déplacement mécaniques (p1, p2, ...) établis.

14. Système lève-vitre pour une vitre de véhicule automobile (11), comprenant un système de commande (10) selon l'une quelconque des revendications précédentes.

15. Système lève-vitre selon la revendication 14, dans lequel le système de commande (10) compare les paramètres de déplacement mécaniques (p1, p2, ...) établis pour la zone d'entrée (110) de la vitre dans un joint d'étanchéité de vitre (111) associé à des valeurs limites de paramètre pour une entrée correcte dans le joint d'étanchéité de la vitre.

16. Système de siège de véhicule pour un siège de véhicule automobile (11), comprenant un système de commande (10) selon l'une quelconque des revendications 1 à 13.

17. Système de réglage pour un hayon (11) d'un véhicule automobile, comprenant un système de commande (10) selon l'une quelconque des revendications 1 à 13.
